# EUROPEAN PATENT SPECIFICATION

(11) **EP 2 990 921 B1**
(45) Date of publication and mention of the grant of the patent: **25.03.2020**
(21) Application number: 15179956.6
(22) Date of filing: 06.08.2015
(51) Int. Cl.: G06F 3/0481, G06F 3/0484, G06F 3/0488

(54) **ELECTRONIC DEVICE AND METHOD FOR PROVIDING DRAWING FUNCTION THEREOF**
ELEKTRONISCHE VORRICHTUNG UND VERFAHREN ZUR BEREITSTELLUNG EINER ZEICHENFUNKTION DAFÜR
DISPOSITIF ÉLECTRONIQUE ET PROCÉDÉ PERMETTANT DE FOURNIR UNE FONCTION DE DESSIN POUR CELUI-CI

(30) Priority: 26.08.2014 KR 20140111550
(43) Date of publication of application: 02.03.2016
(73) Proprietor: Samsung Electronics Co., Ltd., Gyeonggi-do 16677 (KR)
(72) Inventor: YAKISHYN, Yevgen, 16677 Gyeonggi-do (KR)
(74) Representative: HGF Limited

(56) References cited:
- EP-A1- 0 821 300
- US-A1- 2010 281 366
- US-A1- 2011 148 791
- US-A1- 2012 180 002
- US-A1- 2012 206 489
- US-A1- 2014 108 976

## Description

### TECHNICAL FIELD

The present disclosure relates to an electronic device that provides a drawing function according to a touch input of a user and a method for providing a drawing function of an electronic device.

### BACKGROUND

In recent years, as electronic devices have become more portable, the electronic device has been developed to perform various functions such as audio and video call functions, an information input/output function, a data storage function, and the like.

In particular, an electronic device such as a portable terminal or the like may perform comprehensive multimedia functions such as a photo or video capturing function, a playback and editing function of music or multimedia files, a game and broadcast reception, and the like.

In addition, recent electronic devices support a memo function and the like, and also support a hand-drawing function through a touch input as well as a direct text input. Thus, users are capable of inputting characters, letters, words, etc. at the input device using their hands as well as inputting various diagrams or graphs to the electronic device.

However, in many cases, there are limitations associated with recognizing hand-drawn objects by an electronic device and there are inconveniences due to slow recognition speed, complex processing process and interface, and the like.

The above information is presented as background information only to assist with an understanding of the present disclosure. No determination has been made, and no assertion is made, as to whether any of the above might be applicable as prior art with regard to the present disclosure.

US2012/180002 A1 discloses a system for interacting with a spreadsheet in which a user may select data and draw a gesture to generate a display of a chart to represent the selected data. The chart may be placed at different locations.

EP0821300 A1 discloses how a hand gesture is used to create a new border in a table and objects may be automatically adjusted so that they belong to the regions indicated by the gestures.

US2014/108976 A1 concerns a computing device which receives a first user input at presence-sensitive display of the computing device, wherein the first user input corresponds to a portion of a desired non-textual object. The device displays a first graphical representation indicating the first user input at the touchscreen display, and determines a first non-textual object suggestion based upon at least the first user input. The device displays a second graphical representation indicating the first non-textual object suggestion, wherein the second graphical representation of the first non-textual object suggestion is displayed differently than the first graphical representation of the first user input, and detects an indication whether the first non-textual object suggestion corresponds to the desired non-textual object.

### SUMMARY

Aspects of the present disclosure are to address at least the above-mentioned problems and/or disadvantages and to provide at least the advantages described below. Accordingly, an aspect of the present disclosure is to provide an electronic device that can readily recognize and generate various objects based on a previously generated object and a touch input pattern of a user when performing a drawing function and a method for providing a drawing function of an electronic device.

In accordance with an aspect of the present disclosure, an electronic device is provided in accordance with claim 1.

In accordance with another aspect of the present disclosure, a method for
providing a drawing function is provided according to claim 9.

According to an electronic device and a method for providing a drawing function according to various embodiments of the present disclosure, various objects may be generated according to a trajectory of a user's touch input.

According to an electronic device and a method for providing a drawing function according to various embodiments of the present disclosure, complex shapes of objects may be readily generated based on a shape of a previously generated object.

According to an electronic device and a method for providing a drawing function according to various embodiments of the present disclosure, various shapes of objects may be generated through a simple operation.

According to an electronic device and a method for providing a drawing function according to various embodiments of the present disclosure, a time and a process for generating various objects may be reduced.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram of an electronic device according to various embodiments of the present disclosure;
FIG. 2 is a flowchart illustrating a method for providing a drawing function of an electronic device according to various embodiments of the present disclosure;
FIG. 3 is a flowchart illustrating a method for providing a drawing function of an electronic device according to various embodiments of the present disclosure;
FIG. 4 is a flowchart illustrating a method for providing a drawing function according to various embodiments of the present disclosure;
FIG. 5 illustrates an operation of an electronic device according to various embodiments of the present disclosure;
FIG. 6 illustrates an operation of an electronic device according to various embodiments of the present disclosure;
FIG. 7 illustrates an operation of an electronic device according to various embodiments of the present disclosure;
FIG. 8 illustrates an operation of an electronic device according to various embodiments of the present disclosure;
FIG. 9 illustrates an operation of an electronic device according to various embodiments of the present disclosure;
FIG. 10 illustrates an operation of an electronic device according to various embodiments of the present disclosure;
FIG. 11 illustrates an operation of an electronic device according to various embodiments of the present disclosure;
FIG. 12 illustrates an operation of an electronic device according to various embodiments of the present disclosure;
FIG. 13 illustrates an operation of an electronic device according to various embodiments of the present disclosure;
FIG. 14 illustrates an operation of an electronic device according to various embodiments of the present disclosure; and
FIG. 15 illustrates an operation of an electronic device according to various embodiments of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

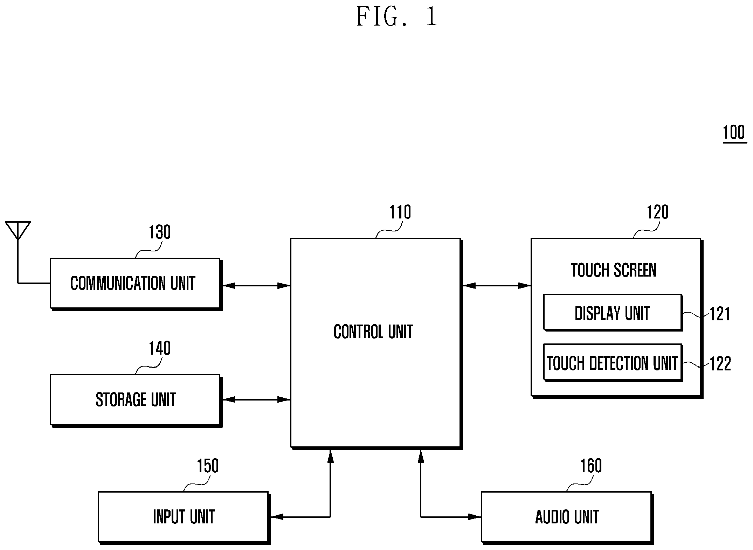

FIG. 1 is a block diagram of an electronic device 100 according to various embodiments of the present disclosure.
Referring to FIG. 1, the electronic device 100 may include a control unit 110, a touch screen 120, a communication unit 130, a storage unit 140, an input unit 150, and an audio unit 160.

The control unit 110 may control a plurality of hardware or software components connected to the control unit 110 by driving an operating system (OS) or an application program and perform the processing and calculation of a variety of data including multimedia data. The control unit 110 may be implemented as, for example, a system on chip (SoC). According to an embodiment, the control unit 110 may further include a graphics processing unit (GPU, not shown).

The control unit 110 may perform a hand-drawing function according to a user's input. The control unit 110 may determine an object having a shape corresponding to a trajectory of the touch input. For example, the control unit 110 may determine an object corresponding to a trajectory associated with the movement trajectory of user's touch input based on an input signal transmitted from a touch screen. According to various embodiments of the present disclosure, the object may include diagrams having complex shapes such as figures each having a shape of one of a straight line, a curved line, a triangle, a rectangle, a polygon, a circle, an ellipse, a pentagram, etc. In addition, the objects may include charts, graphs, or the like. The object is not limited to the above-described shapes and may have various shapes corresponding to a movement trajectory of the user's touch input. The object may be a plurality of figures having the above-described shapes. For example, when the user's touch input is determined to be a drag input of two fingers, the control unit 110 may determine an object of two parallel straight lines corresponding to the drag input.

According to an embodiment, the control unit 110 may determine a basic object having a preset similar shape according to the trajectory of the user's touch input. The basic object may have a figure having a simple path. For example, the basic object may be a figure having a shape of one of a straight line, a curved line, a triangle, a rectangle, a polygon, a circle, an ellipse, a pentagram, etc. For example, even when the trajectory of the touch input received from the user does not accurately draw a rectangle, the control unit 110 may identify the overall shape of the trajectory of the touch input and determine the rectangular object.

The control unit 110 may determine whether a previously generated object is present in a position associated with the received touch input. For example, the control unit 110 may determine whether a new object is recognized in a position of an object that was previously generated and displayed on a display unit 121. For example, when a triangular object was previously displayed on the display unit 121, the control unit 110 may determine whether the trajectory of the user's touch input may be superimposed on the previously generated triangular object.

According to various embodiments of the present disclosure, the control unit 110 may correct the previously generated object based on a shape (or a type) of the previously generated object or a shape (or a type) of the object determined according to the trajectory of the touch input.

For example, when the previously generated object is present in the position in which the touch input is received, the control unit 110 may correct the previously generated object based on the determined object. When the previously generated object is absent in the position in which the touch input is received, the control unit 110 may generate the determined object. According to an embodiment, the control unit 110 may generate the determined object as is or generate a complex object corresponding to the determined object. For example, when an object of two straight lines where one line is arranged orthogonal to the other line is determined according to the trajectory of the touch input, the control unit 110 may generate the determined object or generate a complex object of a column chart corresponding to the object of two straight lines orthogonal to each other. The complex object corresponding to the recognized object may be variously set or changed according to a user's setting input.

According to various embodiments of the present disclosure, when the determined object is a linear object, the control unit 110 may correct the previously generated object based on the linear object. When the determined object is not the linear object, the control unit 110 may generate a complex object. The control unit 110 may convert the previously generated object into the complex object. The complex object may include at least one of a table, a pie chart, a column chart, a pyramid diagram, an area chart, a chevron diagram, a Venn diagram, a bullet list diagram, etc. The complex object may include various shapes of diagrams for managing data other than the above-described charts, graphs, and diagrams.

According to various embodiments of the present disclosure, when the linear object is determined according to the trajectory of the touch input, the control unit 110 may determine whether to add the linear object from the user. For example, when the linear object is determined, the control unit 110 may control the display unit 121 to display a message for confirming a user's intention or control the audio unit 160 to output a confirmation sound. For example, when the linear object is determined, the control unit 110 may display a pop-up window for determining whether to add the determined linear object. The control unit 110 may determine whether to add the linear object according to the user's input. According to various embodiments of the present disclosure, the control unit 110 may confirm the user's intention according to a characteristic of the touch input such as a length, a pressure, or a time of the user's touch input. For example, when the user's touch input is equal to or larger than a reference value, the control unit 110 may determine that the recognized linear object is an input for dividing an object and when the user's touch input is less than the reference value, the control unit 110 may determine that the recognized linear object is an input for adding the linear object.

When the linear object is added, the control unit 110 may generate an object that includes the linear object superimposed on the previously generated object. For example, the control unit 110 may superimpose the linear object corresponding to the user's touch input on the previously generated circular object.

According to various embodiments of the present disclosure, when the linear object is not added, the control unit 110 may edit the previously generated object based on the shape of the linear object. Specifically, the control unit 110 may determine whether a low order object that is present in the position in which the touch input is received is a basic object. When the low order object is the basic object, the control unit 110 may modify the shape of the low order object. For example, the control unit 110 may divide the low order object (the basic object) into a plurality of distinct objects or convert the low order object (the basic object) into a complex object. Here, the basic object may be an object having a shape of one of a straight line, a curved line, a triangle, a rectangle, a circle, a polygon, an ellipse, a pentagram, etc. The complex object may be an object formed by a combination of at least two or more of the above-described basic objects where the combination may be two of the same shapes or two different shapes. In addition, the complex object may be a table, a chart, a graph, or a diagram formed by the combination of the basic objects.

When the low order object is the basic object, the control unit 110 may determine whether the linear object is an input for dividing an object. For example, the control unit 110 may output a message window or a sound associated with confirming a user's intention. When the linear object is the input for dividing an object, the control unit 110 may divide the low order object based on the linear object. The control unit 110 may divide the low order object according to a trajectory of the linear object. For example, when the previously generated low order object is a rectangle, the control unit 110 may detect a linear object associated with the rectangle and divide the low order object to generate two rectangles according to where the linear object overlaps the low order object.

When the input is not intended to modify an object, the control unit 110 may correlate the input with a complex object based on the shape of the input. For example, when the input is associated with low order object such as a rectangle, the control unit 110 may convert the low order object into a table. When the low order object is a single circle, the control unit 110 may convert the low order object into a pie chart. When the low order object is straight lines orthogonal to each other, the control unit 110 may convert the low order object into a column chart. When the low order object is a triangle, the control unit 110 may convert the low order object into a pyramid diagram. When the low order object is a plurality of superimposed circles, the control unit 110 may convert the low order object into a Venn diagram. According to various embodiments of the present disclosure, the complex object corresponding to the shape of the low order object is not limited to the above-described examples and may be variously set or changed according to a user's setting input.

When the low order object is not the basic object, the control unit 110 may edit the low order object according to the shape of the determined object. The control unit 110 may determine various objects other than the linear object according to the trajectory of the user's touch input. When the low order object is the complex object, the control unit 110 may edit the low order object according to the shape of the determined object. For example, in a case in which the low order object is a table, the control unit 110 may combine specific cells of the table corresponding to the position in which the touch input is received when the object of two parallel straight lines is determined according to the user's touch input. By way of another example, when the linear object corresponding to the touch input is determined in a case in which the low order object is the table, the control unit 110 may divide a cell of the position in which the touch input is received to generate a plurality of cells. When the low order object is a column chart, the control unit 110 may insert a figure (e.g., a column, a triangle, or the like each indicating a value of the chart) corresponding to the determined object into the column chart. For example, when recognizing a rectangular object in a case in which the low order object is a bullet list diagram, the control unit 110 may add a new block to the bullet list diagram.

According to various embodiments of the present disclosure, when the determined object is not a linear object, the control unit 110 may determine whether to add the determined object to a previously determined object. In an exemplary embodiment, the control unit 110 may output a pop-up window or a guide sound to confirm a user's intention. When it is determined to add the determined object, the control unit 110 may generate the determined object. When it is determined not to add the determined object, the control unit 110 may determine whether the low order object is a basic object. When the low order object is the basic object, the control unit 110 may convert the low order object into a complex object according to the shape of the low order object. When the low order object is not the basic object, the control unit 110 may edit the low order object according to the shape of the recognized object. For example, the control unit 110 may edit the low order object based on the shape of the low order object and the shape of the recognized object. When an object having a shape similar to the shape of the low order object is determined, the control unit 110 may add a new block to the low order object. For example, when a circular object is determined in a case in which the low order object is a Venn diagram, the control unit 110 may add a new block to correct the Venn diagram. By way of another example, when a rectangular object is determined in a case in which the low order object is a bullet list diagram, the control unit 110 may add a new block to correct a bullet list diagram. By way of still another example, when a linear object curved in the same direction in a case in which the low order object is a chevron diagram, the control unit 110 may add a new block to correct the chevron diagram.

The touch screen 120 may be configured to perform an input function as well as a display function. The touch screen 120 may include various elements to perform an input/output function. For example, the touch screen 120 may include a display unit 121 and a touch detection unit 122. The display unit 121 may be configured to display various screens or interfaces (e.g., a media content playback screen, a call transmission screen, a messenger screen, a game screen, a gallery screen, etc.) according to a user's operation of the electronic device 100.

The display unit 121 may display (output) information processed in a user device. For example, when the user device is in a call mode, the display unit 121 may display a user interface (UI) or a graphical UI (GUI), which is associated with the call. In addition, when the user device is in a video call mode, the display unit 121 may display photographed and/or received images, a UI, a GUI, or the like associated with a video call. The display unit 121 may support a screen display by a transversal mode in a direction in which the user device is rotated (or placed), a screen display by a longitudinal mode, and a screen conversion display according to a change between the transversal mode and the longitudinal mode.

The display unit 121 may include at least one of a liquid crystal display (LCD), a thin film transistor-LCD (TFT-LCD), a light emitting diode (LED), an organic LED (OLED), an active matrix OLED (AMOLED), a flexible display, a bended display, and a three-dimensional (3D) display. Some of these displays may be implemented as a transparent display configured in a transparent type or an optical transparent type, so that the outside can be viewed there through.

According to various embodiments of the present disclosure, the display unit 121 may display the object generated by the control unit 110 while the electronic device 100 performs a hand-drawing function.

The touch detection unit 122 may receive an input from a user. For example, the touch detection unit 122 may receive an indication associated with a touch input applied to the display unit 121 and transmit a signal associated with the received touch input to the control unit 110.

The touch detection unit 122 may be provided on the display unit 121. The touch detection unit 122 may detect a touch event input or gesture (e.g., a touch-based long press input, a touch-based short press input, a single-touch-based input, a multi-touch-based input, a touch-based gesture (e.g., drag or the like) input, etc.) of a user in contact with a touch screen surface. In addition, the touch detection unit 122 may detect and/or correlate coordinates associated with the touch event when detecting the touch event of the user in contact with the touch screen surface and transmit the detected coordinates to the control unit 110.

In an exemplary embodiment, the touch detection unit 122 may be configured to convert a pressure applied to a specific portion of the display unit 121 or a change in the electrostatic capacitance generated in the specific portion of the display unit 121 into an input signal. The touch detection unit 122 may be configured to detect an amount of pressure associated with the touch input according to an applied touch scheme as well as the position and area associated with the pressure. When the touch detection unit 122 detects a touch input, signal(s) corresponding to the touch input may be transmitted to a touch controller (not shown). The touch controller (not shown) may process the signal(s) and then transmit the processed signal(s) to the control unit 110.

According to an embodiment, the touch detection unit 122 may include a touch panel. The touch panel may recognize a touch input, for example, in at least one method of a capacitive method, a pressure sensitive method, an infrared method, and an ultrasonic wave method. In addition, the touch panel may further include a control circuit. In the capacitive method, physical contact or proximity recognition is possible. The touch panel may alternatively or additionally include a tactile layer such that the touch panel provides a tactile response to a user.

The communication unit 130 may support a wireless communication function and be configured as a mobile communication module when the electronic device 100 supports a mobile communication function. The communication module 130 may include a radio frequency (RF) transmission unit that up-converts and amplifies the frequency of the transmitted radio signal and an RF reception unit that low-noise-amplifies the received radio signal and down-converts the frequency. In addition, when the electronic device 100 supports a short range wireless communication function such as Wi-Fi communication, Bluetooth communication, ZigBee communication, ultra wideband (UWB) communication, near field communication (NFC), and the like, the communication unit 130 may include a Wi-Fi communication module, a Bluetooth communication module, a ZigBee communication module, a UWB communication module, an NFC communication module, and the like, respectively. In particular, according to an embodiment of the present disclosure, the communication unit 130 may transmit an image and/or an object generated through a hand-drawing function to the external electronic device 100 or upload the image or the object to the Internet or a social network through a network.

The storage unit 140 may include image data, sound data, data input from a camera, data for calculation processing, an algorithm required for the operation of the electronic device 100, setting data, guide information, and the like, as well as temporarily store processing result or the like. The storage unit 140 may include a volatile memory and/or a non-volatile memory. For example, the volatile memory may include a static random access memory (SRAM), a dynamic RAM (DRAM), and the like, and the non-volatile memory may include a read only memory (ROM), a flash memory, a hard disk, a secure digital (SD) memory card, a multi-media card (MMC), and the like. According to an embodiment of the present disclosure, the storage unit 140 may store an object generated by the control unit 110. The storage unit 110 may store a basic object and a complex object which are used in the hand-drawing function.

The input unit 150 may include a (digital) pen sensor, keys, or an ultrasonic input device. The (digital) pen sensor may be implemented, for example, by using a method identical or similar to a method of receiving a touch input from a user or by using a separate sheet for recognition. For example, the keys may include, for example, physical buttons, optical keys, and/or a keypad. The ultrasonic input device may be a device that detects a micro sound wave in the electronic device 100 through an input tool generating an ultrasonic signal and identifies data and enable wireless recognition.

According to various embodiments of the present disclosure, the input unit 150 may receive an input for generating an object from a user. For example, the input unit 150 may receive a touch input from a user through a pen sensor. For example, the pen sensor may detect the touch of the external electronic device (e.g., a digital pen, a stylus, or the like), and receive an input for generating an object. The input unit 150 may transmit the received input to the control unit 110.

The audio unit 160 may convert a sound and an electrical signal bidirectionally. The audio unit 160 may include, for example, at least one of a speaker, a receiver, an earphone, and a microphone, and convert input or output sound information. According to an embodiment of the present disclosure, the audio unit 160 may output a guide sound for requesting an input from a user during a hand-drawing operation.

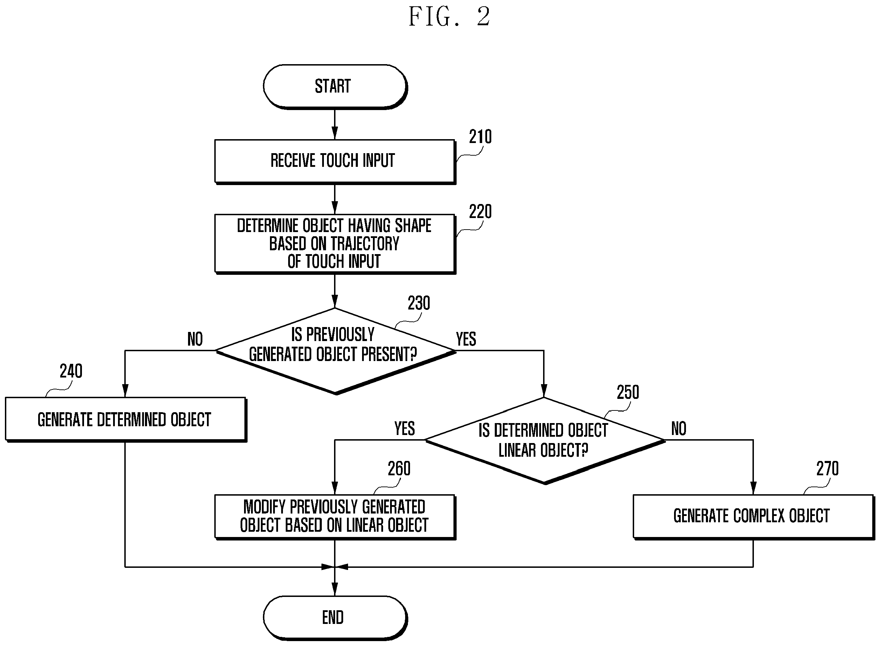

FIG. 2 is a flowchart illustrating a method for providing a drawing function of an electronic device according to various embodiments of the present disclosure.

In operation 210, the electronic device 100 may execute a hand-drawing function. For example, a function may be executed at the electronic device 100 to display a memo pad, a note, a canvas, or other input interface to receive a hand-drawing, and the like. In an exemplary embodiment, the electronic device 100 may receive a touch input from a user via the input interface.

In operation 220, the electronic device 100 may determine an object having a shape based on the touch input. In an exemplary embodiment, a plurality of basic objects may be predetermined and stored at the electronic device 100. For example, the basic object may be a figure having a simple path such as one or more of a straight line, a curved line, a triangle, a rectangle, a polygon, a circle, an ellipse, a pentagram, etc. In addition, a plurality of predetermined inputs may be defined such that one input correlates to each basic object. For example, a first touch input having a first trajectory may be associated with a first basic object and a second touch input having a second trajectory different from the first trajectory may be associated with a second basic object.

In an exemplary embodiment, the predetermined input associated with each basic object may be defined such that when the trajectory of the touch input received from the user does not draw an accurate figure, the electronic device 100 may identify the overall shape of the trajectory of the touch input and determine the basic object having a similar shape.

In operation 230, the electronic device 100 may determine whether a previously generated object is present in a position associated with the received touch input. In an exemplary embodiment, the electronic device 100 may determine whether an object is displayed within the hand-drawing function interface. When the previously generated object is absent, the electronic device 100 may proceed to operation 240. When the previously generated object is present, the electronic device 100 may proceed to operation 250.

In operation 240, the electronic device 100 may generate the determined object. For example, the electronic device 100 may compare the received input with the predetermined input and generate the determined basic object associated with the received input. In an exemplary embodiment, the electronic device 100 may display the generated object on a touch screen.

In operation 250, when a previously generated object is present, the electronic device 100 may determine whether the received input is corresponds to a linear object. The linear object may be an object having the shape of one or more straight lines. When the recognized object is the linear object, the electronic device 100 may proceed to operation 260. When the determined object is not the linear object, the electronic device 100 may proceed to operation 270.

In operation 260, the electronic device 100 may modify the previously generated object based on the linear object. In an exemplary embodiment, the electronic device 100 may separate the previously generated object into a plurality of objects based on the linear object where the previously generated object is divided into two or more different objects based on the linear object. Alternatively, the electronic device 100 may correct or edit the shape of the previously generated object based on the linear object.

In operation 270, the electronic device 100 may generate a complex object. For example, the electronic device 100 may generate a new complex object based on the previously generated object and the recognized object associated with the received input such that the electronic device 100 converts the previously generated object into a complex object. The complex object may include at least one of a table, a pie chart, a column chart, a pyramid diagram, an area chart, a chevron diagram, a Venn diagram, a bullet list diagram, etc.

According to various embodiments of the present disclosure, by performing the above-described operations, the electronic device 100 may recognize a hand-drawing of a user to generate or correct various objects. In addition, the above-described operations may be repeatedly performed such that one or more objects may be generated within an interface associated with the hand-drawing function.

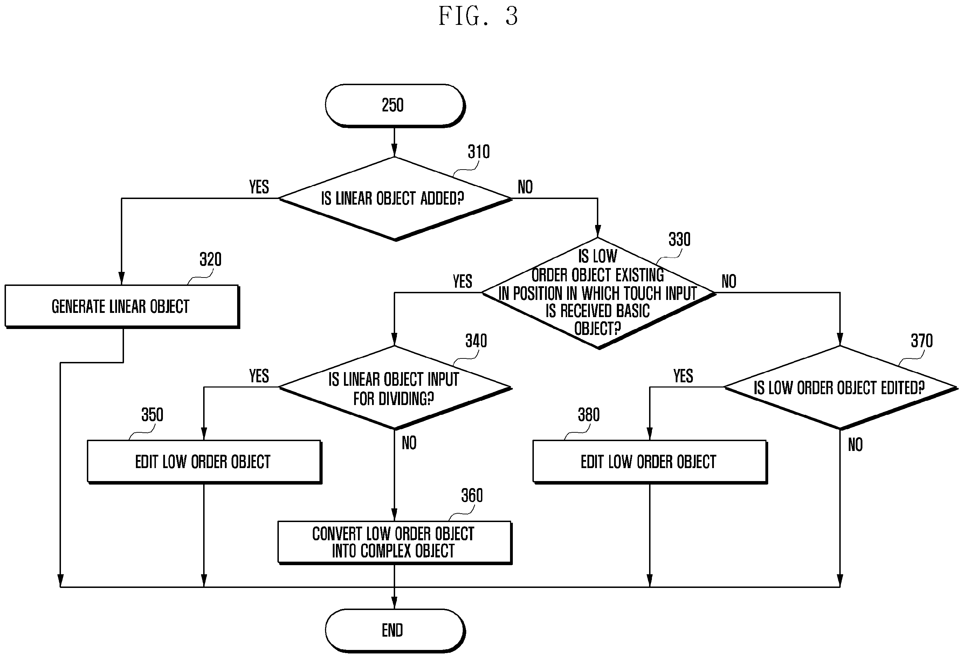

FIG. 3 is a flowchart illustrating a method for providing a drawing function of an electronic device according to various embodiments of the present disclosure.

In operation 310, the electronic device 100 may determine whether to add a linear object based on a user input. For example, after receiving a touch input, the electronic device 100 may display a message to a user or the audio unit 160 may output a confirmation sound. For example, the electronic device 100 may display a pop-up window for determining whether to add the recognized linear object. In this case, the electronic device 100 may determine whether to add the linear object according to a user's input to the displayed message or the confirmation sound. According to various embodiments of the present disclosure, in operation 310, the electronic device 100 may confirm the user's intention (e.g., whether to add the linear object, whether to divide the previously generated object according to the linear object, or the like) according to a length, a pressure, or a time of the user's touch input.

When it is determined that the user's touch input is to add the linear object in operation 310, the electronic device 100 may proceed to operation 320. When the user's touch input is not to add the linear object, the electronic device 100 may proceed to operation 330.

In operation 320, the electronic device 100 may generate the linear object. The electronic device 100 may additionally generate the linear object so as to be superimposed on a previously generated object according to the position in which the user's touch input is received. For example, the electronic device 100 may additionally draw a straight line on a previously drawn object or figure.

In operation 330, the electronic device 100 may determine whether a low order object existing below the recognized object is a basic object. The low order object refers to a previously generated object that is displayed in the position associated with the received touch. When the low order object is a basic object, the electronic device 100 may proceed to operation 340. When the low order object is not a basic object, the electronic device 100 may proceed to operation 370.

In operation 340, the electronic device 100 may determine whether the recognized linear object is an input associated with dividing the previously generated object. For example, the electronic device 100 may display a pop-up window to confirm an intention of the recognized linear object. In this case, the electronic device 100 may determine whether the linear object is the input associated with dividing the previously generated object.

According to various embodiments of the present disclosure, in operation 340, the electronic device 100 may confirm a user's intent to divide a previously generated object according to a length, a pressure, or a time of the user's touch input. When the linear object is an input associated with dividing the previously generated object, the electronic device 100 may proceed to operation 350. When the linear object is not an input associated with dividing the previously generated object, the electronic device 100 may proceed to operation 360.

In operation 350, the electronic device 100 may divide the low order object based on the linear object. For example, the electronic device 100 may divide a previously generated figure according to a trajectory of the linear object to generate a plurality of figures.

In operation 360, the electronic device 100 may convert the low order object into a complex object. That is, the electronic device 100 may convert the basic object into a complex object based on the input associated with the linear object. In an exemplary embodiment, the electronic device 100 may convert the basic object into the complex object based on the shape of the basic object. For example, the corresponding complex object may be set according to each of the basic objects. For example, a rectangle, a circle, and a triangle may be set in advance so as to respectively correspond to a table, a pie chart, and a pyramid diagram. According to various embodiments of the present disclosure, the setting of the complex object corresponding to the basic object may be variously made or changed according to the user's input.

In operation 370, the electronic device 100 may determine whether to edit the low order object. For example, the electronic device 100 may determine whether to edit the low order object based on the input received from the user. The electronic device 100 may display a message for determining whether to edit the low order object. The electronic device 100 may receive an input to determine whether to edit the low order object from the user. When it is determined to edit the low order object, the electronic device 100 may proceed to operation 380. When it is determined not to edit the low order object, the electronic device 100 may not perform a separate operation.

In operation 380, the electronic device 100 may edit the low order object. The electronic device 100 may edit the low order object based on the shape of the linear object or the low order object. For example, when the low order object is a table, the electronic device 100 may divide cells of the table according to the linear object. When the low order object is an area chart, the electronic device 100 may divide an area of the area chart according to the linear object.

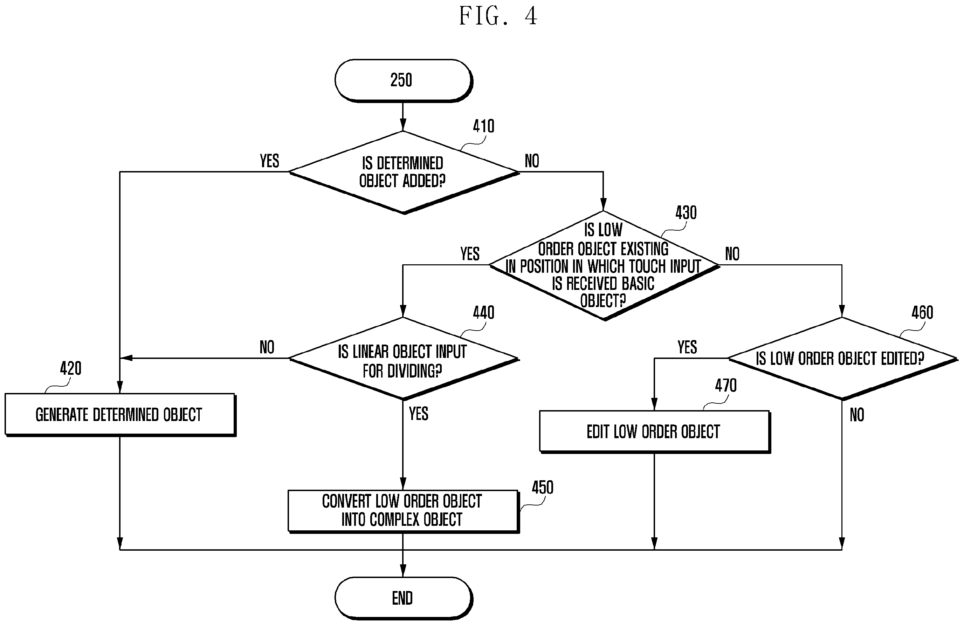

FIG. 4 is a flowchart illustrating a method for providing a drawing function according to various embodiments of the present disclosure.

In operation 410, the electronic device 100 may determine whether to add the determined object based on a user input. For example, the electronic device 100 may confirm a user's intention through a separate user input. Alternatively, the electronic device 100 may confirm the user's intention according to information (e.g., a length (size), a pressure, or a time of the touch input) of the touch input for generating an object. When it is determined to add the recognized object, the electronic device 100 may proceed to operation 420. When it is determined not to add the recognized object, the electronic device 100 may proceed to operation 430.

In operation 420, the electronic device 100 may generate the determined object. The electronic device 100 may generate the recognized object in a position associated with a position in which the touch input is received.

In operation 430, the electronic device 100 may determine whether a low order object in the position associated with the received touch input is a basic object. When the low order object is a basic object, the electronic device 100 may proceed to operation 440. When the low order object is not a basic object, the electronic device 100 may proceed to operation 460.

In operation 440, the electronic device 100 may determine whether the user's touch input is an input associated with generating a complex object. For example, the electronic device 100 may receive an input indicating whether to generate the complex object from a user. Alternatively, the electronic device 100 may discern the user's intention according to a state of the user's touch input. When it is determined not to generate a complex object based on a user's input, the electronic device 100 may branch to operation 420 to generate the determined object. When it is determined not to generate a complex object, the electronic device 100 may proceed to operation 450.

In operation 450, the electronic device 100 may convert the low order object (that is, the basic object) into the complex object. In an exemplary embodiment, the electronic device 100 may convert the basic object into the complex object based on the shape of the basic object.

In operation 460, the electronic device 100 may determine whether to edit the low order object based on an input from a user. The electronic device 100 may receive an input for determining whether to edit the low order object from the user. When it is determined to edit the low order object, the electronic device 100 may proceed to operation 470. When it is determined not to edit the low order object, the electronic device 100 may not perform a separate operation.

In operation 470, the electronic device 100 may edit the low order object based on the determined object. The electronic device 100 may edit the low order object based on the shapes of the determined object and the low order object. For example, when the low order object is a table, the electronic device 100 may add a cell according to the determined rectangular object. When the low order object is a bullet list diagram, the electronic device 100 may add a new block according to the same rectangular object. That is, according to various embodiments of the present disclosure, the electronic device 100 may perform various editing functions according to the type of the low order object even when the same object is recognized from the user's touch input.

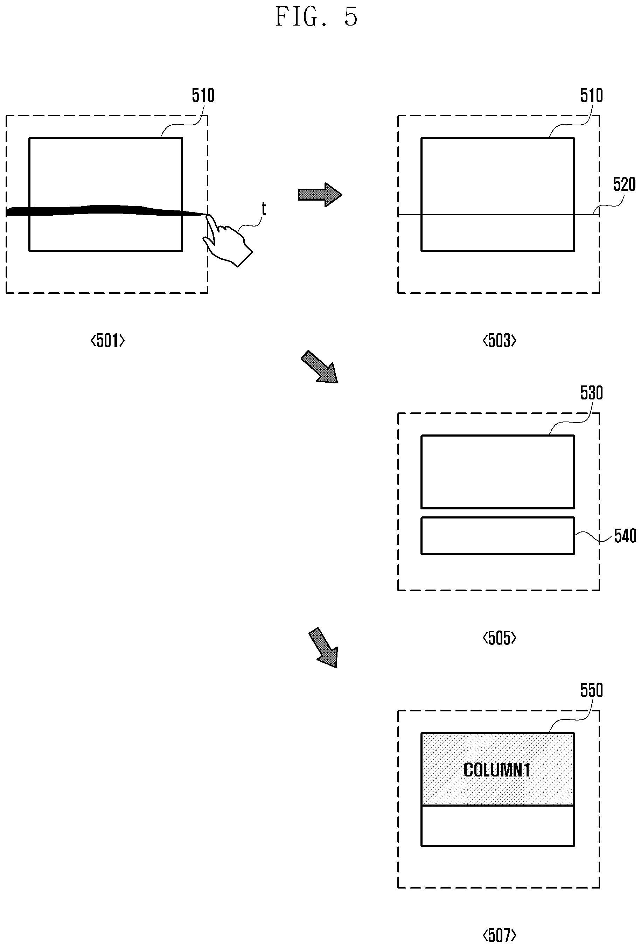

FIGS. 5 to 15 illustrate an electronic device according to various embodiments of the present disclosure. For example, FIGS. 5 to 15 illustrate various screens or interfaces displayed on the touch screen 120 of the electronic device 100 according to a method for providing a drawing function.

FIG. 5 illustrates an electronic device according to various embodiments of the present disclosure.

Referring to FIG. 5, in operation 501, the electronic device 100 receives a user's touch input (t) on a previously generated basic object 510. The electronic device 100 may determine an object according to a trajectory of the user's touch input (t). For example, the electronic device 100 may determine a transversal linear object associated with the user's touch input (t). When the linear object is determined, the electronic device 100 may determine whether the previously generated object 510 is present or absent in a position in which the touch input is received. When the previously generated object is present in the position in which the touch input is received, the electronic device 100 may modify the previously generated object based on the linear object (or the trajectory of the user's touch input (t)). While not illustrated, the electronic device 100 may display a message window for confirming a user's intention and receive a confirmation input from a user. For example, after receiving an input from the user confirming the recognition of the linear object, the electronic device 100 may add a linear object 520 in the position in which the touch input (t) is received, as shown in operation 503. Alternatively, the electronic device 100 may determine whether a received input associated with the linear object corresponds with an instruction to divide the previously generated basic object 510. For example, when input (t) is determined to be an instruction to divide the previously generated basic object 510, the electronic device 100 may divide a basic object 510 to generate two objects 530 and 540 as shown in operation 505. When it is determined that the user's touch input (t) does not correspond to generating the linear object or dividing the object, the electronic device 100 may determine to generate a complex object 550 as shown in operation 507. In an exemplary embodiment, the electronic device 100 may generate the complex object 550 based on the shape of the previously generated basic object 510. For example, when the basic object 510 is a rectangle, the electronic device 100 may convert the basic object 510 into a table 550.

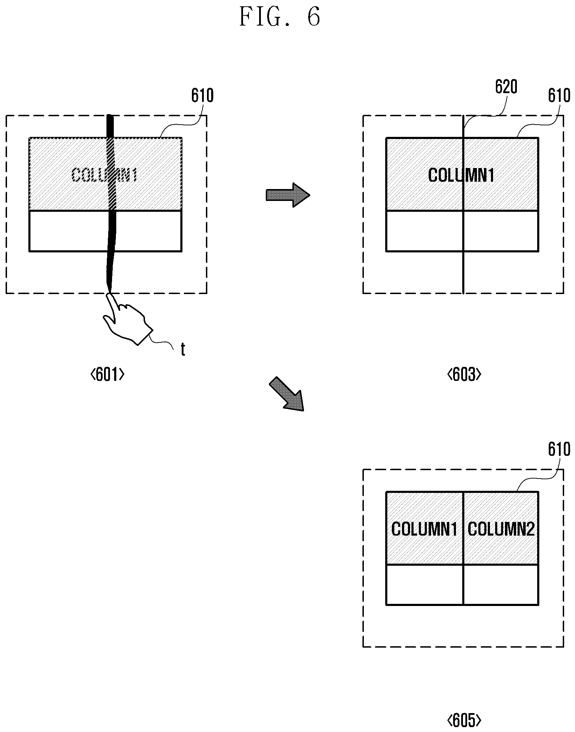

FIG. 6 illustrates an electronic device according to various embodiments of the present disclosure.

In operation 601, when a previously generated complex object 610 is present, the electronic device 100 receives a touch input (t). The electronic device 100 may determine that the touch input (t) corresponds to a longitudinal linear object according to a trajectory of the user's touch input (t). The electronic device 100 may confirm the purpose of the touch input (t) from the user. For example, when receiving an input for determining that the touch input (t) is to generate an object from the user, the electronic device 100 may generate a straight line object 620 corresponding to the trajectory of the touch input (t) on the complex object 610 as shown in operation 603.

When it is determined that the user's touch input (t) is not to generate the object, the electronic device 100 may modify the complex object 610 as shown in operation 605. For example, the electronic device 100 may divide a cell of the complex object (e.g., a table) 610 to generate a plurality of cells based on the user's touch input (t).

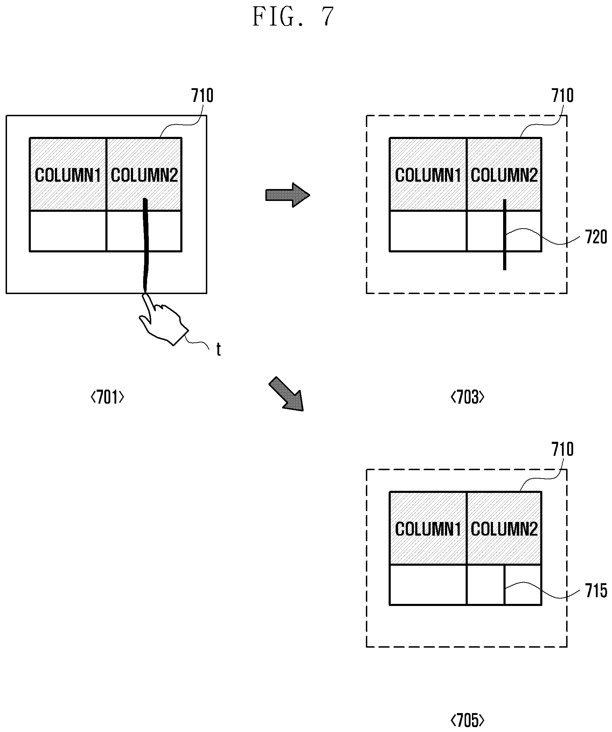

FIG. 7 illustrates an electronic device according to various embodiments of the present disclosure.

In operation 701, the electronic device 100 receives a user's touch input (t) in a region of a previously generated complex object 710. The electronic device 100 may determine that the touch input (t) corresponds to a longitudinal linear object based on a trajectory of the touch input (t). The electronic device 100 may confirm the purpose of the touch input (t) from the user. For example, the electronic device 100 may receive an input for confirming an intention of the touch input (t) from the user.

When it is determined that the touch input (t) is associated with an instruction to generate a new object, the electronic device 100 may generate, on the previously generated complex object 710, the determined linear object or a linear object 720 corresponding to the trajectory of the touch input (t) as shown in operation 703.

When it is determined that the touch input (t) is not associated with an instruction to generate a new object, the electronic device 100 may divide a cell corresponding to a position 715 of the touch input (t) among cells of a previously generated table (that is, the complex object) 710 as shown in operation 705.

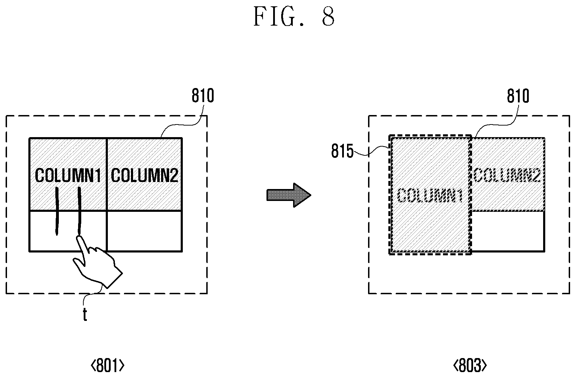

FIG. 8 illustrates an electronic device according to various embodiments of the present disclosure.

In operation 801, the electronic device 100 receives a touch input (t) from a user on a previously generated complex object 810. The electronic device 100 may determine an object associated with the touch input (t) according to a trajectory of the user's touch input (t). For example, the electronic device 100 may determine an object including two parallel longitudinal lines.

When determining a new object other than a linear object according to the touch input received on the complex object 810, the electronic device 100 may correct the previously generated complex object 810 based on the determined object associated with the touch input (t). In operation 803, the electronic device 100 may combine left side cells of the table (complex object) 810 according to the object constituted of the two parallel lines to correct the left side cells to a single cell 815. In an exemplary embodiment, the electronic device 100 may combine cells in a region of the complex object associated with the position or the trajectory associated with the user's touch input (t) when the determined object is determined to overlap the complex object 810.

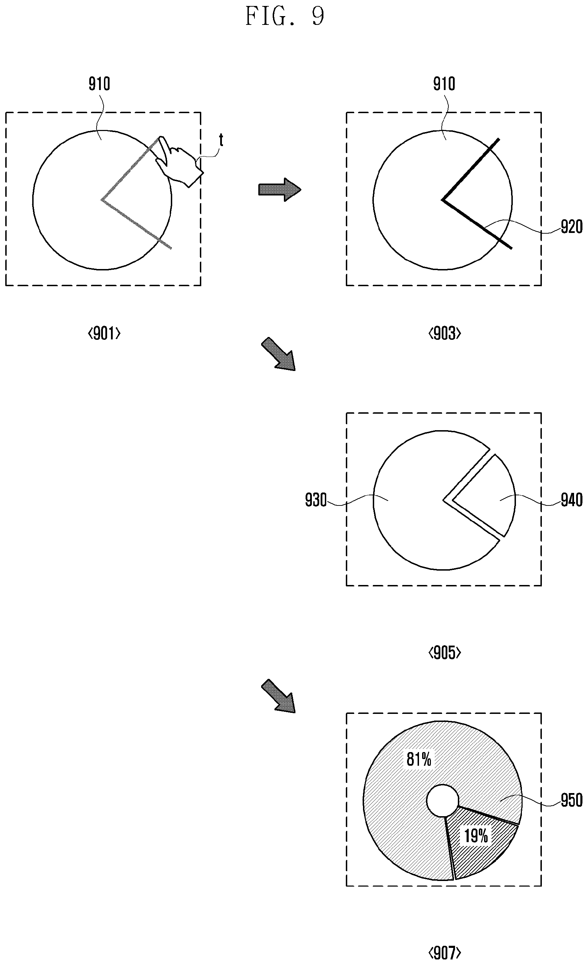

FIG. 9 illustrates an electronic device according to various embodiments of the present disclosure.

In operation 901, the electronic device 100 receives a touch input (t) from a user after a circular basic object 910 is previously generated. The electronic device 100 may determine that the touch input (t) is associated with an object of a straight line which is curved along a trajectory of the user's touch input (t). The electronic device 100 may confirm an intention of the touch input (t) from the user (e.g., an input for generating a new object, an input for dividing the corresponding object, an input for converting the corresponding object into a different object, etc.).

When it is determined that the user's touch input (t) is associated with an instruction to generate an object, the electronic device 100 may generate a determined object 920 on the circle (basic object) 910 as shown in operation 903.

When it is determined that the user's touch input (t) is associated with an instruction to divide the previously generated object, the electronic device 100 may divide the previously generated circle 910 to generate two objects 930 and 940 as shown in operation 905.

When it is determined that the user's touch input (t) is not an instruction to generate an object or to divide the object, the electronic device 100 may convert the basic object 910 into a complex object 950 based on the shape (or the kind) of the basic object 910 as shown in operation 907. For example, when the previously generated basic object is the circle 910, the electronic device 100 may convert the circle into a pie chart 950.

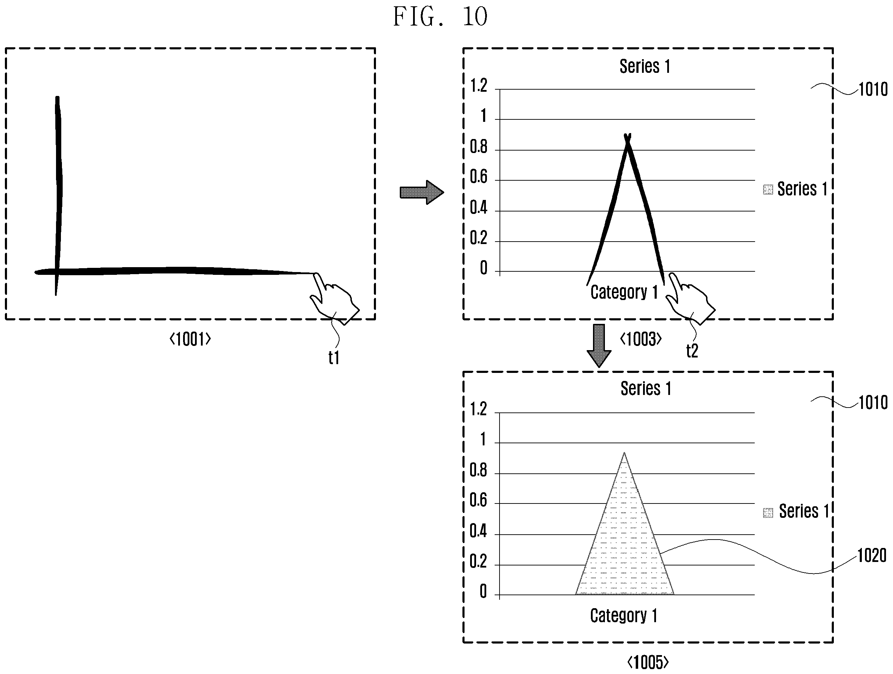

FIG. 10 illustrates an electronic device according to various embodiments of the present disclosure.

In operation 1001, the electronic device 100 receives a first touch input (t1). In an exemplary embodiment, the electronic device 100 may determine an object according to a trajectory of the user's touch input (t1). Referring to FIG. 10, the electronic device 100 may determine an object corresponding to two straight lines arranged orthogonal to each other based on the user's touch input (t1).

According to an embodiment, when determining that the object corresponds to two straight lines orthogonal to each other in a state in which a previously generated object is absent, the electronic device 100 may alternatively generate a column chart 1010 as shown in operation 1003 based on the user's touch input (t1). The electronic device 100 may further receive a second touch input (t2) on the column chart 1010. The electronic device 100 may determine an object corresponding to two straight lines which are input crossing each other in the right/left direction according to a trajectory based on the second touch input (t2).

The electronic device 100 may correct the previously generated object according to the shape of the previously generated object and the shape of the newly determined object. For example, when the object of two straight lines crossing each other on the column chart is recognized, the electronic device 100 may input a data value 1020 to the column chart 1010 as shown in operation 1005. The electronic device 100 may generate the object 1020 indicating the data value according to the recognized object in the column chart 1010.

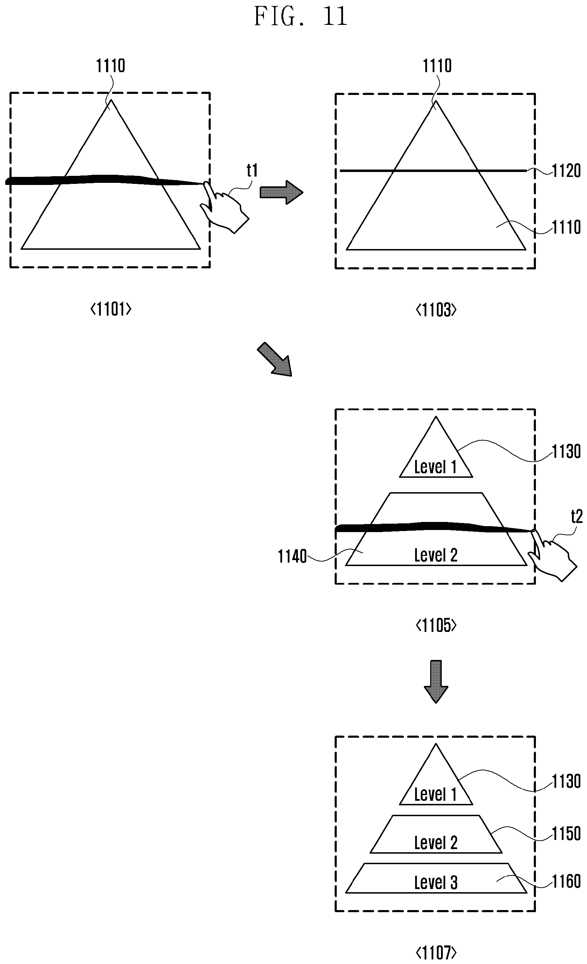

FIG. 11 illustrates an electronic device according to various embodiments of the present disclosure.

In operation 1101, the electronic device 100 receives a first touch input (t1) from a user on a previously generated triangular basic object 1110. The electronic device 100 may determine a linear object corresponding to a trajectory of the touch input (t1). When the basic object is present below the determined linear object, the electronic device 100 may confirm the purpose of the linear object (that is, the touch input (t1)) from the user.

When it is determined (confirmed) that the user's touch input (t1) is associated with an instruction to generate an object corresponding to the user's touch input (t1), the electronic device 100 may generate the determined linear object 1120 on the triangular basic object 1110 as shown in operation 1103.

When it is determined that the user's touch input (t1) is associated with an instruction to divide an object, the electronic device 100 may divide the triangular basic object 1110 to generate two objects 1130 and 1140 as shown in operation 1105.

The electronic device 100 may receive a second touch input (t2) on the divided object. In this case, the electronic device 100 may confirm the purpose of the user's touch input (t2) from the user. For example, the electronic device 100 may display a window for confirming whether the user's touch input is to divide the object and receive a confirmation input from the user. Alternatively, when the existing touch input (t1) is associated with an instruction to divide the object, the electronic device 100 may determine that the subsequent touch input (t2) having the same shape a touch input (t1) is also associated with an instruction to divide the object. In this case, the electronic device 100 may further divide the object 1140 shown in operation 1105 into two objects 1150 and 1160 according to a trajectory (that is, the determined linear object) of the user's touch input (t2), as shown in operation 1107.

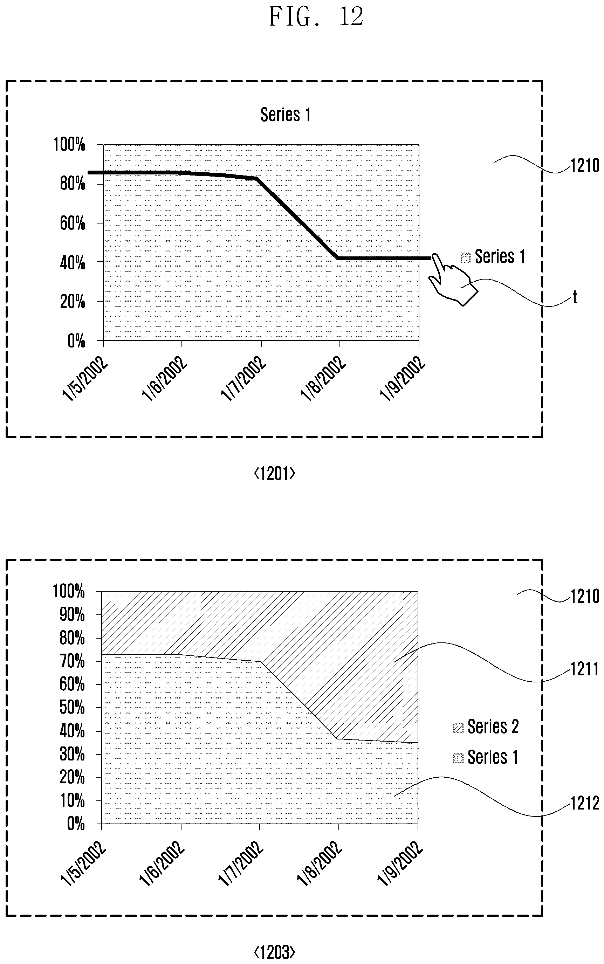

FIG. 12 illustrates an electronic device according to various embodiments of the present disclosure.

In operation 1201, the electronic device 100 receives a user's touch input (t) on an area of a previously generated chart-shaped complex object 1210. The electronic device 100 may determine a curved line-shaped object according to a trajectory of the user's touch input (t). The electronic device 100 may correct the shape of the complex object based on the shape of the previously generated complex object and the shape of the determined object.

For example, when recognizing the curved line-shaped object on an area indicating data of an area chart 1210, the electronic device 100 may modify the area chart 1210 based on the position and shape of the curved linear object as shown in operation 1203. The electronic device 100 may input a data value to the area chart 1210 based on the recognized object. The electronic device 100 may input the data value based on the recognized object to the area chart 1210 and divide a data area of the area chart 1210 into two areas 1211 and 1212 to display the divided areas.

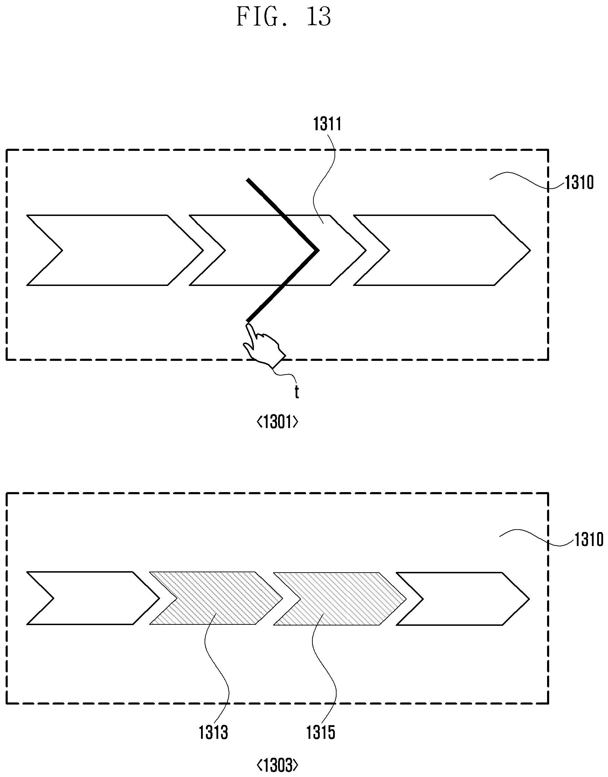

FIG. 13 illustrates an electronic device according to various embodiments of the present disclosure.

In operation 1301, the electronic device 100 receives a touch input (t) from a user on a previously generated complex object 1310 having a chevron diagram shape. The electronic device 100 may determine a curved line-shaped object according to a trajectory of the user's touch input (t). The electronic device 100 may modify the shape of the previously generated object and the shape of the determined object.

For example, when the similar curved linear object is recognized on the chevron diagram 1310, the electronic device 100 may modify the chevron diagram 1310 such that block 1311 corresponding to the position of the recognized object is divided to generate two blocks 1313 and 1315 as shown in operation 1303.

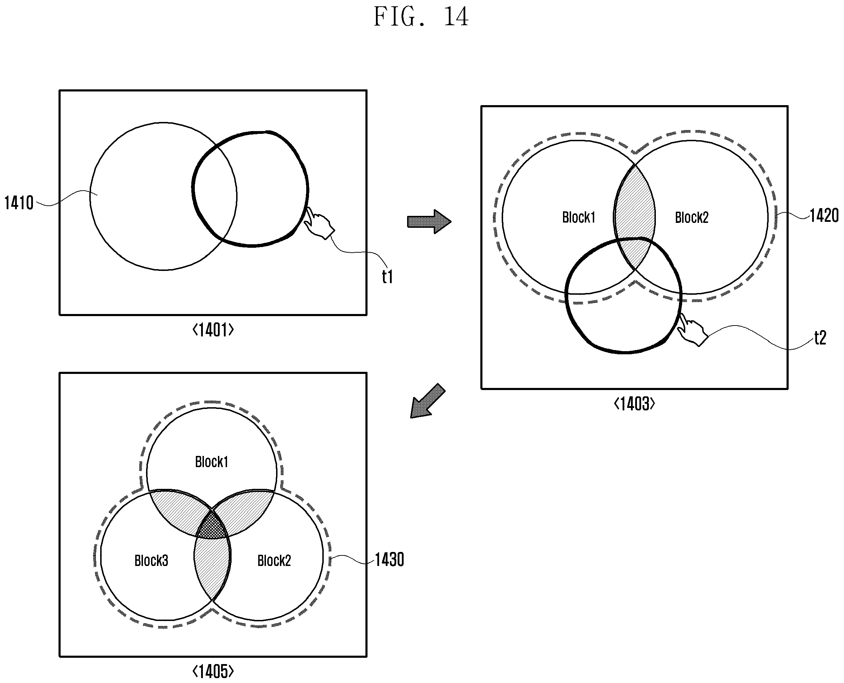

FIG. 14 illustrates an electronic device according to various embodiments of the present disclosure.

In operation 1401, the electronic device 100 receives a first user's touch input (t1) on a previously generated circle (basic object) 1410. The electronic device 100 may determine a circular object according to a trajectory of the user's touch input (t1). The electronic device 100 may convert the previously generated object into a complex object based on the shape of the previously generated basic object and the determined object.

For example, when the circular object is recognized in a region associated with the previously generated circular object 1410, the electronic device 100 may convert the circular basic object 1410 into a Venn diagram-shaped complex object 1420 as shown in operation 1403. The electronic device 100 may further receive a second touch input (t2) on the converted and generated Venn diagram 1420. The electronic device 100 may recognize t he circular object according to a trajectory of the second touch input (t2). The electronic dev ice 100 may modify the complex object according to the shape of the complex object and th e shape of the determined object.

For example, when the existing complex object is the Venn diagram 1420 and the newly recognized object is the circle (t2), the electronic device 100 may further add a sin gle category (block 3) to the existing Venn diagram 1420 as shown in operation 1405. That is , the electronic device 100 may generate a modified Venn diagram 1430.

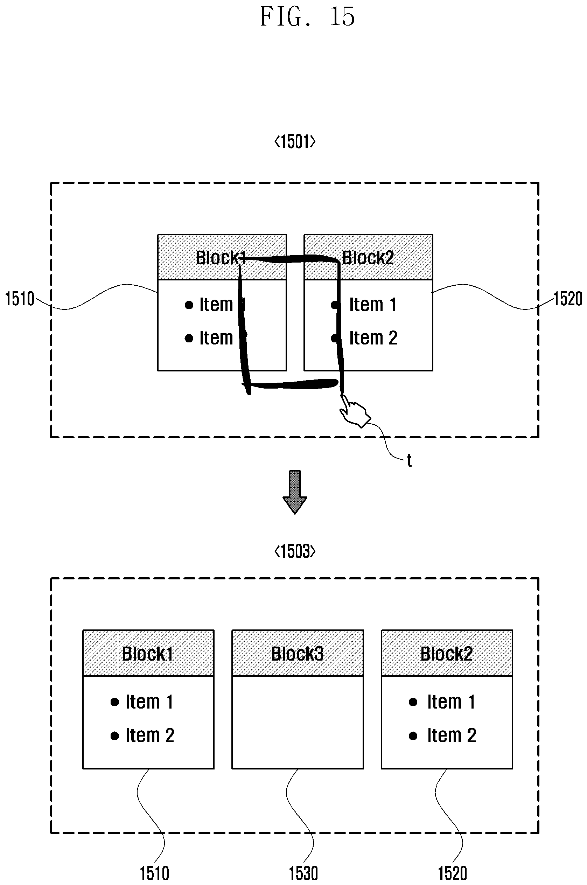

FIG. 15 illustrates an electronic device according to various embodiments of t he present disclosure.

In operation 1501, the electronic device 100 receives a touch input (t) on prev iously generated complex objects 1510 and 1520 from a user. The electronic device 100 ma y receive the touch input (t) on the previously generated blocks 1510 and 1520 of a bullet lis t diagram from the user. The electronic device 100 may determine a rectangular object acco rding to a trajectory of the user's touch input (t). When determining that touch input (t) is a ssociated with instructions to generate a new object corresponding to the complex object, th e electronic device 100 modifies the previously generated complex object.

For example, the electronic device 100 may additionally add a new block 1530 between the two blocks 1510 and 1520 of the bullet list diagram based on the determined o bject as shown in operation 1503.

While the present disclosure has been shown and described with reference to various embodiments thereof, it will be understood by those skilled in the art that various ch anges in form and details may be made therein without departing from the scope of the pres ent disclosure as defined by the appended claims.

## Claims

1. An electronic device that provides a drawing function according to a touch input, the electronic device comprising:
a touch screen (120) configured to:
receive the touch input from a user, and
display an object based on the touch input; and
a control unit (110) configured to:
determine an object having a shape corresponding to a trajectory of the touch input;
determine whether a previously generated object is present in a position associated with the received touch input;
modify the previously generated object based on the determined object when the previously generated object is present;
generate the determined object when the previously generated object is absent;
wherein modifying the previously generated object comprises the control unit (110) being configured to:
determine whether a low order object corresponding to the previously generated object existing in the position in which the touch input is received is a basic object
when the low order object is the basic object, in dependence on user input, either convert the low order object into a complex object based on the shape of the basic object or generate the determined object; and
when the low order object is not the basic object, edit the low order object based on the determined object.

2. The electronic device of claim 1, wherein the control unit is further configured to:
modify (350) the previously generated object based on a linear object when the determined object is the linear object, and
generate (360) a complex object having a shape of at least one of a table, a chart, and a diagram when the determined object is not the linear object.

3. The electronic device of claim 2, wherein the complex object includes at least one of a table, a pie chart, a column chart, a pyramid diagram, an area chart, a chevron diagram, a Venn diagram, and a bullet list diagram.

4. The electronic device of claim 2, wherein the control unit is further configured to:
determine whether to add the linear object from the user,
generate the determined linear object when the linear object is added, and
modify the previously generated object based on a shape of the linear object when the linear object is not added.

5. The electronic device of claim 2, wherein the control unit is further configured to:
determine (340) whether the linear object is an input for dividing the previously generated object from the user,
modify (350) the low order object existing below the linear object according to the linear object when the linear object is the input for dividing the previously generated object, and
convert (360) the low order object into the complex object according to a shape of the low order object when the linear object is not the input for dividing the previously generated object.

6. The electronic device of claim 5, wherein the basic object is an object having a shape of one of a straight line, a curved line, a triangle, a rectangle, a circle, an ellipse, and a pentagram.

7. The electronic device of claim 6, wherein the complex object is an object formed by a combination of at least one of the basic objects.

8. The electronic device of claim 2, wherein the control unit is further configured to:
determine whether to add the determined object from the user when the determined object is not the linear object,
generate the determined object when the determined object is added,
determine whether the low order object is a basic object when the determined object is not added,
convert the low order object into the complex object according to a shape of the low order object when the low order object is the basic object, and
modify the low order object according to a shape of the determined object when the low order object is not the basic object.

9. A method for providing a drawing function according to a touch input of an electronic device, the method comprising:
receiving (210) the touch input from a user;
determining (220) an object having a shape corresponding to a trajectory of the touch input;
determining (230) whether a previously generated object is present in a position in which the touch input is received;
modifying the previously generated object based on the determined object when the previously generated object is present;
generating (240) the determined object when the previously generated object is absent;
wherein the modifying the previously generated object comprises:
determining (330) whether a low order object corresponding to the previously generated object existing in the position in which the touch input is received is a basic object;
when the low order object is the basic object, in dependence on user input, either converting the low order object into a complex object based on the shape of the basic object or generating the determined object; and
when the low order object is not the basic object, editing the low order object based on the determined object.

10. The method of claim 9, wherein the modifying of the previously generated object includes:
determining whether the determined object is a linear object,
correcting the previously generated object based on the linear object when the determined object is the linear object, and
generating a complex object when the determined object is not the linear object.

11. The method of claim 10, wherein the complex object includes at least one of a table, a pie chart, a column chart, a pyramid diagram, an area chart, a chevron diagram, a Venn diagram, and a bullet list diagram.

12. The method of claim 10, wherein the correcting of the previously generated object includes:
determining whether to add the linear object from the user,
generating the determined linear object when the linear object is added, and
modifying the previously generated object based on a shape of the linear object when the linear object is not added.

13. The method of claim 9, wherein the changing of the low order object includes:
determining (440) whether the linear object is an input for dividing the previously generated object,
dividing (350) the low order object existing below the linear object according to the linear object when the linear object is the input for dividing the previously generated object, and
converting (360) the low order object into the complex object according to a shape of the low order object when the linear object is not the input for dividing the previously generated object.

14. The method of claim 10, wherein the generating of the complex object includes:
determining (410) whether to add the determined object from the user,
generating (420) the determined object when the determined object is added, and
modifying (450, 470) the low order object based on a shape of a low order object existing in the position in which the touch input is received and the determined object when the determined object is not added,
wherein the modifying of the low order object includes:
converting (450) the low order object into the complex object according to the shape of the low order object when the low order object is the basic object, and
editing (470) the low order object according to a shape of the determined object when the low order object is not the basic object.

## Patentansprüche

1. Elektronische Vorrichtung, die eine Zeichenfunktion gemäß einer Berührungseingabe bereitstellt, wobei die elektronische Vorrichtung Folgendes umfasst:
einen Berührungsbildschirm (120), der für Folgendes konfiguriert ist:
Empfangen der Berührungseingabe von einem Benutzer, und
Anzeigen eines Objekts basierend auf der Berührungseingabe; und
eine Steuereinheit (110), die für Folgendes konfiguriert ist:
Bestimmen eines Objekts, das eine Form aufweist, die einer Trajektorie der Berührungseingabe entspricht;
Bestimmen, ob ein zuvor erzeugtes Objekt in einer Position vorhanden ist, die mit der empfangenen Berührungseingabe verbunden ist;
Modifizieren des zuvor erzeugten Objekts basierend auf dem bestimmten Objekt, wenn das zuvor erzeugte Objekt vorhanden ist;
Erzeugen des bestimmten Objekts, wenn das zuvor erzeugte Objekt abwesend ist;
wobei das Modifizieren des zuvor erzeugten Objekts umfasst, dass die Steuereinheit (110) für Folgendes konfiguriert ist:
Bestimmen, ob ein Objekt niedriger Ordnung entsprechend dem zuvor erzeugten Objekt, das in der Position vorhanden ist, in der die Berührungseingabe empfangen wird, ein Basisobjekt ist;
wenn das Objekt niedriger Ordnung das Basisobjekt ist, in Abhängigkeit der Benutzereingabe, entweder Umwandeln des Objekts niedriger Ordnung in ein komplexes Objekt basierend auf der Form des Basisobjekts oder Erzeugen des bestimmten Objekts; und
wenn das Objekt niedriger Ordnung nicht das Basisobjekt ist, Bearbeiten des Objekts niedriger Ordnung basierend auf dem bestimmten Objekt.

2. Elektronische Vorrichtung nach Anspruch 1, wobei die Steuereinheit ferner für Folgendes konfiguriert ist:
Modifizieren (350) des zuvor erzeugten Objekts basierend auf einem linearen Objekt, wenn das bestimmte Objekt das lineare Objekt ist; und
Erzeugen (360) eines komplexen Objekts, das eine Form von zumindest einem von einer Tabelle, einer Karte und einem Diagramm aufweist, wenn das bestimmte Objekt nicht das lineare Objekt ist.

3. Elektronische Vorrichtung nach Anspruch 2, wobei das komplexe Objekt zumindest eines von einer Tabelle, einem Tortendiagramm, einem Säulendiagramm, einem Pyramidendiagramm, einem Bereichsdiagramm, einem Chevrondiagramm, einem Venn-Diagramm und einem Aufzählungsdiagramm beinhaltet.

4. Elektronische Vorrichtung nach Anspruch 2, wobei die Steuereinheit ferner für Folgendes konfiguriert ist:
Bestimmen, ob das lineare Objekt von dem Benutzer hinzugefügt werden soll,
Erzeugen des bestimmten linearen Objekts, wenn das lineare Objekt hinzugefügt wird, und
Modifizieren des zuvor erzeugten Objekts basierend auf einer Form des linearen Objekts, wenn das lineare Objekt nicht hinzugefügt wird.

5. Elektronische Vorrichtung nach Anspruch 2, wobei die Steuereinheit ferner für Folgendes konfiguriert ist:
Bestimmen (340), ob das lineare Objekt eine Eingabe zum Teilen des zuvor erzeugten Objekts von dem Benutzer ist,
Modifizieren (350) des Objekts niedriger Ordnung, das unter dem linearen Objekt vorhanden ist, gemäß dem linearen Objekt, wenn das lineare Objekt die Eingabe zum Teilen des zuvor erzeugten Objekts ist, und
Umwandeln (360) des Objekts niedriger Ordnung in das komplexe Objekt gemäß einer Form des Objekts niedriger Ordnung, wenn das lineare Objekt nicht die Eingabe zum Teilen des zuvor erzeugten Objekts ist.

6. Elektronische Vorrichtung nach Anspruch 5, wobei das Basisobjekt ein Objekt ist, das eine Form von einem von einer geraden Linie, einer gekrümmten Linie, einem Dreieck, einem Rechteck, einem Kreis, einer Ellipse und einem Pentagramm aufweist.

7. Elektronische Vorrichtung nach Anspruch 6, wobei das komplexe Objekt ein Objekt ist, das durch eine Kombination von zumindest einem der Basisobjekte gebildet wird.

8. Elektronische Vorrichtung nach Anspruch 2, wobei die Steuereinheit ferner für Folgendes konfiguriert ist:
Bestimmen, ob das bestimmte Objekt von dem Benutzer hinzugefügt werden soll, wenn das bestimmte Objekt nicht das lineare Objekt ist,
Erzeugen des bestimmten Objekts, wenn das bestimmte Objekt hinzugefügt wird,
Bestimmen, ob das Objekt niedriger Ordnung ein Basisobjekt ist, wenn das bestimmte Objekt nicht hinzugefügt wird,
Umwandeln des Objekts niedriger Ordnung in das komplexe Objekt gemäß einer Form des Objekts niedriger Ordnung, wenn das Objekt niedriger Ordnung das Basisobjekt ist, und
Modifizieren des Objekts niedriger Ordnung gemäß einer Form des bestimmten Objekts, wenn das Objekt niedriger Ordnung nicht das Basisobjekt ist.

9. Verfahren zum Bereitstellen einer Zeichenfunktion gemäß einer Berührungseingabe einer elektronischen Vorrichtung, wobei das Verfahren Folgendes umfasst:
Empfangen (210) der Berührungseingabe von einem Benutzer;
Bestimmen (220) eines Objekts, das eine Form aufweist, die einer Trajektorie der Berührungseingabe entspricht;
Bestimmen (230), ob ein zuvor erzeugtes Objekt in einer Position vorhanden ist, in der die Berührungseingabe empfangen wird;
Modifizieren des zuvor erzeugten Objekts basierend auf dem bestimmten Objekt, wenn das zuvor erzeugte Objekt vorhanden ist;
Erzeugen (240) des bestimmten Objekts, wenn das zuvor erzeugte Objekt abwesend ist;
wobei das Modifizieren des zuvor erzeugten Objekts Folgendes umfasst:
Bestimmen (330), ob ein Objekt niedriger Ordnung entsprechend dem zuvor erzeugten Objekt, das in der Position vorhanden ist, in der die Berührungseingabe empfangen wird, ein Basisobjekt ist;
wenn das Objekt niedriger Ordnung das Basisobjekt ist, in Abhängigkeit der Benutzereingabe, entweder Umwandeln des Objekts niedriger Ordnung in ein komplexes Objekt basierend auf der Form des Basisobjekts oder Erzeugen des bestimmten Objekts; und
wenn das Objekt niedriger Ordnung nicht das Basisobjekt ist, Bearbeiten des Objekts niedriger Ordnung basierend auf dem bestimmten Objekt.

10. Verfahren nach Anspruch 9, wobei das Modifizieren des zuvor erzeugten Objekts Folgendes beinhaltet:
Bestimmen, ob das bestimmte Objekt ein lineares Objekt ist,
Korrigieren des zuvor erzeugten Objekts basierend auf dem linearen Objekt, wenn das bestimmte Objekt das lineare Objekt ist; und
Erzeugen eines komplexen Objekts, wenn das bestimmte Objekt nicht das lineare Objekt ist.

11. Verfahren nach Anspruch 10, wobei das komplexe Objekt zumindest eines von einer Tabelle, einem Tortendiagramm, einem Säulendiagramm, einem Pyramidendiagramm, einem Bereichsdiagramm, einem Chevrondiagramm, einem Venn-Diagramm und einem Aufzählungsdiagramm beinhaltet.

12. Verfahren nach Anspruch 10, wobei das Korrigieren des zuvor erzeugten Objekts Folgendes beinhaltet:
Bestimmen, ob das lineare Objekt von dem Benutzer hinzugefügt werden soll,
Erzeugen des bestimmten linearen Objekts, wenn das lineare Objekt hinzugefügt wird, und
Modifizieren des zuvor erzeugten Objekts basierend auf einer Form des linearen Objekts, wenn das lineare Objekt nicht hinzugefügt wird.

13. Verfahren nach Anspruch 9, wobei das Ändern des Objekts niedriger Ordnung Folgendes beinhaltet:
Bestimmen (440), ob das lineare Objekt eine Eingabe zum Teilen des zuvor erzeugten Objekts ist,
Teilen (350) des Objekts niedriger Ordnung, das unter dem linearen Objekt vorhanden ist, gemäß dem linearen Objekt, wenn das lineare Objekt die Eingabe zum Teilen des zuvor erzeugten Objekts ist, und
Umwandeln (360) des Objekts niedriger Ordnung in das komplexe Objekt gemäß einer Form des Objekts niedriger Ordnung, wenn das lineare Objekt nicht die Eingabe zum Teilen des zuvor erzeugten Objekts ist.

14. Verfahren nach Anspruch 10, wobei das Erzeugen des komplexen Objekts Folgendes beinhaltet:
Bestimmen (410), ob das bestimmte Objekt von dem Benutzer hinzugefügt werden soll,
Erzeugen (420) des bestimmten Objekts, wenn das bestimmte Objekt hinzugefügt wird, und
Modifizieren (450, 470) des Objekts niedriger Ordnung basierend auf einer Form eines Objekts niedriger Ordnung, das in der Position vorhanden ist, in der die Berührungseingabe empfangen wird, und des bestimmten Objekts, wenn das bestimmte Objekt nicht hinzugefügt wird,
wobei das Modifizieren des Objekts niedriger Ordnung Folgendes beinhaltet:
Umwandeln (450) des Objekts niedriger Ordnung in das komplexe Objekt gemäß der Form des Objekts niedriger Ordnung, wenn das Objekt niedriger Ordnung das Basisobjekt ist, und
Bearbeiten (470) des Objekts niedriger Ordnung gemäß einer Form des bestimmten Objekts, wenn das Objekt niedriger Ordnung nicht das Basisobjekt ist.

## Revendications

1. Dispositif électronique qui procure une fonctionnalité de dessin en fonction d'une entrée de toucher, le dispositif électronique comprenant :
un écran tactile (120) configuré pour :
recevoir l'entrée de toucher depuis un utilisateur, et afficher un objet sur la base de l'entrée de toucher ; et une unité de commande (110) configurée pour :
déterminer un objet ayant une forme correspondant à une trajectoire de l'entrée de toucher ;
déterminer si un objet préalablement généré est présent dans une position associée à l'entrée de toucher reçue ;
modifier l'objet préalablement généré sur la base de l'objet déterminé quand l'objet préalablement généré est présent ;
générer l'objet déterminé quand l'objet préalablement généré est absent ; dans lequel la modification de l'objet préalablement généré comprend l'unité de commande (110) étant configurée pour :
déterminer si un objet d'ordre bas correspondant à l'objet préalablement généré existant dans la position dans laquelle l'entrée de toucher est reçue est un objet basique quand l'objet d'ordre bas est l'objet basique, en dépendance de l'entrée d'utilisateur, soit convertir l'objet d'ordre bas en un objet complexe sur la base de la forme de l'objet basique, soit générer l'objet déterminé ; et
quand l'objet d'ordre bas n'est pas l'objet basique, éditer l'objet d'ordre bas sur la base de l'objet déterminé.

2. Dispositif électronique selon la revendication 1, dans lequel l'unité de commande est en outre configurée pour :
modifier (350) l'objet préalablement généré sur la base d'un objet linéaire quand l'objet déterminé est l'objet linéaire, et générer (360) un objet complexe ayant une forme d'au moins l'un d'un tableau, un graphique et un diagramme quand l'objet déterminé n'est pas l'objet linéaire.

3. Dispositif électronique selon la revendication 2, dans lequel l'objet complexe inclut au moins l'un d'un tableau, un graphique circulaire, un graphique à barres verticales, un diagramme en pyramide, un graphique de surface, un diagramme en chevrons, un diagramme d'Euler et un diagramme en liste de points.

4. Dispositif électronique selon la revendication 2, dans lequel l'unité de commande est en outre configurée pour :
déterminer s'il convient d'ajouter l'objet linéaire depuis l'utilisateur, de générer l'objet linéaire déterminé quand l'objet linéaire est ajouté, et de modifier l'objet préalablement généré sur la base d'une forme de l'objet linéaire quand l'objet linéaire n'est pas ajouté.

5. Dispositif électronique selon la revendication 2, dans lequel l'unité de commande est en outre configurée pour :
déterminer (340) si l'objet linéaire est une entrée destinée à diviser l'objet préalablement généré depuis l'utilisateur, modifier (350) l'objet d'ordre bas existant sous l'objet linéaire en fonction de l'objet linéaire quand l'objet linéaire est l'entrée destinée à diviser l'objet préalablement généré, et convertir (360) l'objet d'ordre bas en l'objet complexe en fonction d'une forme de l'objet d'ordre bas quand l'objet linéaire n'est pas l'entrée destinée à diviser l'objet préalablement généré.

6. Dispositif électronique selon la revendication 5, dans lequel l'objet basique est un objet ayant une forme de l'un parmi une ligne droite, une ligne incurvée, un triangle, un rectangle, un cercle, une ellipse, et un pentagramme.

7. Dispositif électronique selon la revendication 6, dans lequel l'objet complexe est un objet formé par une combinaison d'au moins l'un des objets basiques.

8. Dispositif électronique selon la revendication 2, dans lequel l'unité de commande est en outre configurée pour :
déterminer s'il convient d'ajouter l'objet déterminé depuis l'utilisateur quand l'objet déterminé n'est pas l'objet linéaire, générer l'objet déterminé quand l'objet déterminé est ajouté, déterminer si l'objet d'ordre bas est un objet basique quand l'objet déterminé n'est pas ajouté, convertir l'objet d'ordre bas en l'objet complexe en fonction d'une forme de l'objet d'ordre bas quand l'objet d'ordre bas est l'objet basique, et modifier l'objet d'ordre bas en fonction d'une forme de l'objet déterminé quand l'objet d'ordre bas n'est pas l'objet basique.

9. Procédé de fourniture d'une fonctionnalité de dessin en fonction d'une entrée de toucher d'un dispositif électronique, le procédé comprenant :
la réception (210) de l'entrée de toucher depuis un utilisateur ;
la détermination (220) d'un objet ayant une forme correspondant à une trajectoire de l'entrée de toucher ;
la détermination (230) si un objet préalablement généré est présent dans une position dans laquelle l'entrée de toucher est reçue ;
la modification de l'objet préalablement généré sur la base de l'objet déterminé quand l'objet préalablement généré est présent ;
la génération (240) de l'objet déterminé quand l'objet préalablement généré est absent ;
dans lequel la modification de l'objet préalablement généré comprend : la détermination (330) si un objet d'ordre bas correspondant à l'objet préalablement généré existant dans la position dans laquelle l'entrée de toucher est reçue est un objet basique ;
quand l'objet d'ordre bas est l'objet basique, en dépendance de l'entrée d'utilisateur, soit la conversion de l'objet d'ordre bas en un objet complexe sur la base de la forme de l'objet basique, soit la génération de l'objet déterminé ; et
quand l'objet d'ordre bas n'est pas l'objet basique, l'édition de l'objet d'ordre bas sur la base de l'objet déterminé.

10. Procédé selon la revendication 9, dans lequel la modification de l'objet préalablement généré inclut :
la détermination si l'objet déterminé est un objet linéaire, la correction de l'objet préalablement généré sur la base de l'objet linéaire quand l'objet déterminé est l'objet linéaire, et la génération d'un objet complexe quand l'objet déterminé n'est pas l'objet linéaire.

11. Procédé selon la revendication 10, dans lequel l'objet complexe inclut au moins l'un d'un tableau, un graphique circulaire, un graphique à barres verticales, un diagramme en pyramide, un graphique de surface, un diagramme en chevrons, un diagramme d'Euler et un diagramme en liste de points.

12. Procédé selon la revendication 10, dans lequel la correction de l'objet préalablement généré inclut :
la détermination s'il convient d'ajouter l'objet linéaire depuis l'utilisateur, la génération de l'objet linéaire déterminé quand l'objet linéaire est ajouté, et la modification de l'objet préalablement généré sur la base d'une forme de l'objet linéaire quand l'objet linéaire n'est pas ajouté.

13. Procédé selon la revendication 9, dans lequel la modification de l'objet d'ordre bas inclut : la détermination (440) si l'objet linéaire est une entrée destinée à diviser l'objet préalablement généré, la division (350) de l'objet d'ordre bas existant sous l'objet linéaire en fonction de l'objet linéaire quand l'objet linéaire est l'entrée destinée à diviser l'objet préalablement généré, et la conversion (360) de l'objet d'ordre bas en l'objet complexe en fonction d'une forme de l'objet d'ordre bas quand l'objet linéaire n'est pas l'entrée destinée à diviser l'objet préalablement généré.

14. Procédé selon la revendication 10, dans lequel la génération de l'objet complexe inclut : la détermination (410) s'il convient d'ajouter l'objet déterminé depuis l'utilisateur, la génération (420) de l'objet déterminé quand l'objet déterminé est ajouté, et la modification (450, 470) de l'objet d'ordre bas sur la base d'une forme d'un objet d'ordre bas existant dans la position dans laquelle l'entrée de toucher est reçue et l'objet déterminé quand l'objet déterminé n'est pas ajouté, dans lequel la modification de l'objet d'ordre bas inclut :
la conversion (450) de l'objet d'ordre bas en l'objet complexe en fonction de la forme de l'objet d'ordre bas quand l'objet d'ordre bas est l'objet basique, et l'édition (470) de l'objet d'ordre bas en fonction d'une forme de l'objet déterminé quand l'objet d'ordre bas n'est pas l'objet basique.
